# EUROPEAN PATENT SPECIFICATION

(11) **EP 3 934 967 B1**
(45) Date of publication and mention of the grant of the patent: **16.04.2025**
(21) Application number: 19712518.0
(22) Date of filing: 07.03.2019
(51) Int. Cl.: B62D 13/06, B60G 17/015

(54) **A METHOD FOR DETERMINING A DRIVABLE AREA BY A VEHICLE**
VERFAHREN ZUR BESTIMMUNG EINER ANTREIBBAREN FLÄCHE DURCH EIN FAHRZEUG
PROCÉDÉ DE DÉTERMINATION D'UNE ZONE CARROSSABLE PAR UN VÉHICULE

(43) Date of publication of application: 12.01.2022
(73) Proprietor: VOLVO TRUCK CORPORATION, 405 08 Göteborg (SE)
(72) Inventor: LAINE, Leo, 438 94 Härryda (SE); HENDERSON, Leon, 438 92 Härryda (SE)
(74) Representative: Ström & Gulliksson AB
(86) International application number: PCT/EP2019/055772
(87) International publication number: WO 2020/177872

(56) References cited:
- WO-A1-2017/036526
- DE-A1- 102015 112 313
- US-A1- 2014 195 114

## Description

### TECHNICAL FIELD

The present disclosure relates to methods, control units, and systems for determining drivable areas by articulated vehicles, such as trucks and semi-trailers.

The invention can be applied in heavy-duty vehicle s, such as trucks and construction equipment. Although the invention will be described mainly with respect to a semi-trailer vehicle, the invention is not restricted to this particular vehicle, but may also be used in other vehicles such as different types of rigid trucks, dumpers, trailers, and also in some types of forklifts.

### BACKGROUND

A drivable area is a region which a vehicle can traverse without significant interference from obstacles. Given information about drivable areas, autonomous or semi-autonomous functions can be implemented, such as reversal assistance functions and automatic docking and parking functions.

US 9,862,413 B2 describes a system where an articulated vehicle keeps track of an area swept by the vehicle as it moves. The swept area is determined based on vehicle positions along a track and respective articulation angles of the vehicle. This swept area is then considered a drivable area which can be used to, e.g., control the steering of the towing vehicle when reversing the articulated vehicle along the specified path, such that the articulated vehicle does not extend outwards of the swept area during the reversal.

However, there may be obstacles of varying severity present in the swept area. Some obstacles may be possible to drive over and may therefore not influence the extent of the swept area. These obstacles may, however, affect comfort or safety and should preferably be avoided. On the other hand, a choice may have to be made between reaching some destination while passing some obstacles or not reaching the destination at all.

WO 2017/036526 A1 describes a method for determining a drivable area for a vehicle along a track, wherein data related to the track and the dimensions of the vehicle are used to find a swept area of the vehicle for the track. The determined swept area is combined with sensor data relating to obstacles to find the drivable area. WO 2017/036526 A1, which is seen as the closest prior art, does in particular not disclose how cargo information may be used in said method in order to determine said drivable area as in claim 1.

A more refined estimation of drivable area is therefore preferred in order to improve autonomous and semi-autonomous vehicle operation, including reversal assist functions and the like.

### SUMMARY

It is an object of the present disclosure to provide improved methods for determining drivable areas by vehicles. This object is at least in part obtained by a method for determining a drivable area by a vehicle. The method comprises obtaining data related to a track of the vehicle, wherein the data comprises a plurality of positions, with corresponding headings of the vehicle along the track. The method also comprises obtaining size information of the vehicle and determining a swept area of the vehicle for the track based on the data and on the size information of the vehicle. The method also comprises configuring a sensor on the vehicle to detect when the vehicle drives over an obstacle, recording any obstacles detected by the sensor, and determining the drivable area based on the swept area and on recorded obstacles.

This way a refined representation of the drivable area is obtained in that not only the swept area, i.e., the area traversed by the vehicle, is considered, but also any obstacles encountered while determining the swept area. Consequently, the vehicle may drive over obstacles as the swept area is being established, but these obstacles will be recorded and may influence the final estimation of the drivable area. Notably, the disclosed methods determine drivable areas. This is different from simply recording presence of obstacles, since the latter does not provide information about drivable area, only about areas not suitable for traversing by some types of vehicles.

According to aspects, the sensor comprises a heading detection unit, and the method comprises detecting a heading of the rear end of the vehicle. The sensor unit is then used both for obstacle detection as well as for detecting a heading of the rear end of the vehicle, which is efficient. The heading data is advantageously used in the determining of the swept area.

According to aspects, wherein the vehicle is an articulated vehicle, and wherein the method comprises obtaining a heading of a front end of the articulated vehicle and estimating an articulation angle value based on a difference between the headings of the rear and front ends of the articulated vehicle. Thus, advantageously, articulation angle can be estimated independent of any sensors arranged in connection to, e.g., a fifth wheel or connection joint of the articulated vehicle. This redundant articulation angle estimate can be used to verify output from external articulation angle sensors, and therefore increases fault tolerance and robustness of the overall system. In other words, according to come aspects, the method comprises verifying an output from an external articulation angle sensor of the articulated vehicle based on the estimated articulation angle value.

According to other aspects, the sensor comprises an inertial measurement unit, IMU, configured to detect when the vehicle drives over an obstacle and/or to detect when the vehicle impacts an obstacle laterally, based on a measured acceleration. The IMU may be co-located with other sensor functions, which provides for an efficient and easily assembled unit. The IMU can be used to detect different types of obstacles based on measured accelerations along different axes, and possibly also to classify obstacles depending on if the vehicle drives over the obstacle, if the vehicle hits the obstacle from the side, or if the obstacle represents a combination of accelerations. Thus, a pot-hole giving rise to mainly vertical acceleration by the IMU can be distinguished from a curb which, when hit, would give rise to mainly horizontal acceleration, unless the curb is driven over in which case the resulting acceleration would be a combination of vertical and horizontal acceleration.

According to further aspects, the sensor comprises a measurement device arranged in connection to the trailer suspension system configured to detect when the vehicle drives over an obstacle. This type of sensor represents a cost-efficient means to detect obstacles, since the sensor is already present in many modern vehicles.

According to some aspects, the recording comprises classifying a detected obstacle according to a pre-configured list of obstacle types. This information can later be used by, e.g., algorithms for autonomous driving. For instance, suppose some vehicle is loaded with non-fragile cargo like gravel, then certain types of obstacles may be permitted to drive over, compared to the case where the vehicle is loaded with fragile cargo, like furniture, in which case those same obstacles are to be avoided at all costs.

According to some further aspects, the recording comprises determining a severity level associated with each detected obstacle. The severity level may be used as input to autonomous driving functions and the like, or be used in route planning, for instance during a reversal assist maneuver.

According to aspects, the recording comprises recording a location associated with each detected obstacle, and/or uploading information related to the determined drivable area to a remote server. This way an overview of drivable areas in a region can be obtained. Drivable areas determined by one vehicle may be shared with other vehicles, which is an advantage. Thus, according to some such aspects, the method comprises updating map information, by the remote server, based on the uploaded information.

There are also disclosed herein computer programs, computer program products, control units, systems, and vehicles associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention as defined by the appended claims.

### BRIEF DESCRIPTION OF THE DRAWINGS

With reference to the appended drawings, below follows a more detailed description of embodiments of the invention cited as examples. In the drawings:
- Figure 1: schematically illustrates a vehicle for cargo transport;
- Figure 2: illustrates a vehicle with a swept area;
- Figure 3: illustrates an articulated vehicle with an articulation angle;
- Figures 4-5: schematically illustrate vehicles for cargo transport;
- Figure 6: schematically illustrates a remote server system;
- Figure 7: is a flow chart illustrating methods;
- Figure 8: schematically illustrates a sensor unit and/or a control unit; and
- Figure 9: shows an example computer program product.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

In particular, although some examples are given based on articulated vehicles, it is appreciated that the disclosed techniques are also applicable with rigid trucks, such as tipper trucks, dumpers, and the like.

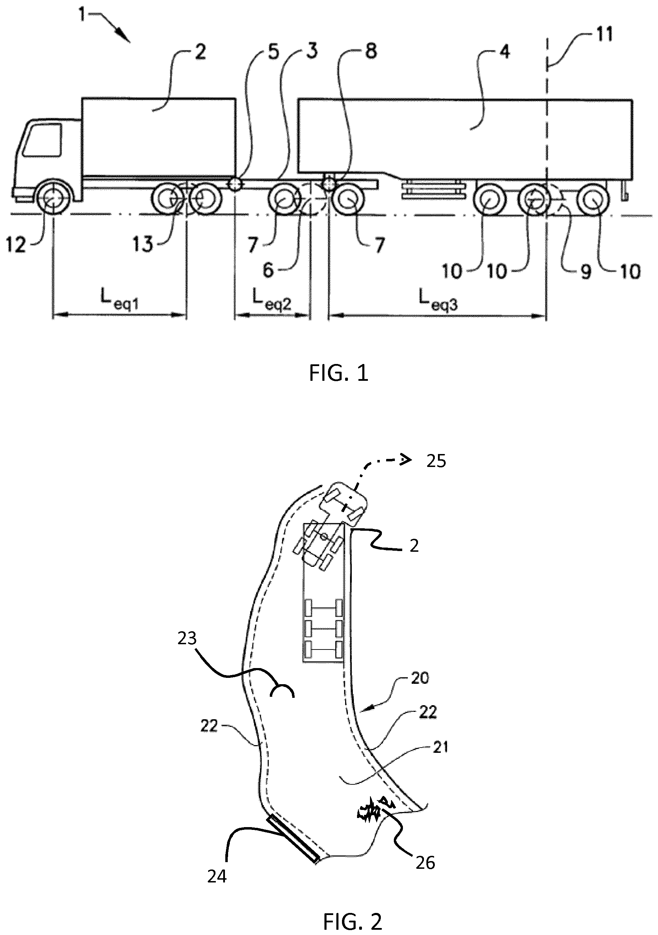

Figure 1 shows a schematic articulated vehicle combination 1 comprising a towing vehicle 2 and two towed vehicles 3, 4. The towing vehicle may be a regular truck adapted for commercial highway use or a tractor having a fifth wheel but may also be an off-road truck or a bus. The first towed vehicle or trailer 3 is in the shown example a dolly having a drawbar connected to the trailer coupling of the truck. The dolly is provided with two wheel-axles 7. The second towed vehicle or trailer 4 is a semitrailer, which is provided with a kingpin 8 that is connected to the fifth wheel of the dolly. This example shows a common type of a longer vehicle combination, but it is also possible to use other types of vehicle combinations having other types of towing vehicles and other types and numbers of towed vehicles. Different vehicle combinations may include a truck with a regular trailer, a truck with a center axle trailer, a truck with a dolly and a semitrailer, a tractor with a semitrailer, a tractor with a B-link and a semitrailer, a tractor with a semitrailer and a regular trailer or a tractor with a semitrailer dolly and a semitrailer.

The towing vehicle may be provided with various autonomous or semi-autonomous driving functions such as an automatic reverse assistance function, in which the steering of the vehicle combination is automated during reversing and where the speed of the vehicle combination may be controlled by the driver.

In the shown vehicle combination, the effective wheel base Leq1 of the towing vehicle, i.e. the truck, is the length from the front axle 12 to the virtual axle 13 of the truck. The effective wheel base Leq2 of the first towed vehicle, i.e. the dolly, is the length from the drawbar connection to the virtual axle 6 of the dolly. The effective wheel base Leq3 of the second towed trailer extends from the king pin 8 to the to the virtual rear axle 9 of the trailer 4.

Based on the vehicle geometry and travelled path, a swept area can be determined. Details on the determining of swept areas or different types of vehicle configurations are disclosed in US 9,862,413 B2 and will therefore not be discussed in more detail herein.

Figure 2 shows a vehicle combination with a modified swept area 20 for the last part of a travelled path 25. In Figure 2, the modified swept area 20 is comprised of the swept area 21 and of tolerance bands 22, one on each side of the swept area 21. The purpose of the tolerance band is to compensate for tolerances in the steering actuator and for tolerances and noise in the measured values from different sensors.

Figure 2 also indicates the presence of obstacles in the swept area. A bump 23 is present which is enforceable, i.e., possible to drive over, by the vehicle 2. A curb 24 is also shown. This curb is not easily enforceable. Thus, when hit by the vehicle the vehicle course will change due to the lateral impact from the curb.

When autonomously operating the vehicle 2 in the swept area, it may be desired to avoid obstacles like the bump 23 depending on scenario. Thus, if the vehicle is a heavy duty truck for transporting stone and gravel, a relatively minor bump may be of no consequence. On the other hand, in case the cargo is fragile, it may be more desirable to avoid even smaller obstacles. The curb 24 on the other hand represents a more severe obstacle which is not easily enforceable. Either this obstacle is avoided in its entirety, or a heavy-duty truck may need to hit the obstacle at some speed in other to pass over it.

The present disclosure evolves around the key concept of not only determining swept areas, but also recording obstacles in those swept areas. This way preferred areas for driving can be distinguished from areas comprising obstacles which may present problems, or which may simply be uncomfortable to drive over. To summarize the main concepts, the articulated vehicle 2 shown in Figures 1 and 2 determines a drivable area by first obtaining data related to a track 25 of the articulated vehicle 2. This data comprises a plurality of corresponding positions, headings and articulation angles 350 of the articulated vehicle along the track. The technique also comprises obtaining size information of the articulated vehicle 2. Based on the size information and on the track-related data, the swept area 21 is determined. On way to do this was outlined in US 9,862,413 B2. Furthermore, the disclosed technique also comprises configuring a sensor on the articulated vehicle to detect when the articulated vehicle makes contact with an obstacle such as the bump 23 or the curb 24. Any encountered obstacle is recording, and a drivable area is then determined based on the swept area and on any recorded obstacles.

Herein, a position and heading may be either a position and heading in some global reference system like WGS-84, or it may be a relative position estimate based on a local reference point and orientation.

Global reference position data can be determined based on, e.g., a global positioning system (GPS) receiver or other satellite-based positioning system. A global position estimate can also be determined based on known landmarks or other reference information.

Global heading data can be determined using a compass.

A relative position can be defined based, e.g., on the vehicle location and orientation at some point in time, or it can be defined based on some fixed landmarks detected by a radar or lidar sensor.

A relative position estimate and heading can be transferred into a global reference system and back to the relative position estimate using a linear transform and its inverse transform.

Thus, it is appreciated that the herein disclosed techniques are applicable both in scenarios where global position reference data is available as well as in scenarios where only relative position data is available, e.g., due to not having a clear view of the sky as in mines, tunnels, and the like.

Different driving surfaces have different levels of roughness or evenness. A high quality asphalt road may be substantially different in roughness compared to a lower quality gravel road. Also, the asphalt road may comprise road shoulders with gravel. Figure 2 illustrates an area 26 associated with some unevenness. Depending on vehicle and scenario, this area may be desirable to avoid.

Aspects of the disclosed techniques comprises detecting a surface roughness level of the drivable area in addition to the detection of obstacles. This information may be used to detect when the vehicle drives onto a road shoulder or drives off the road, even if no severe obstacles are encountered there.

Surface roughness can, e.g., be estimated based on vibrations in the air suspension system, and or based on detected minor disturbances in accelerations measured by an IMU.

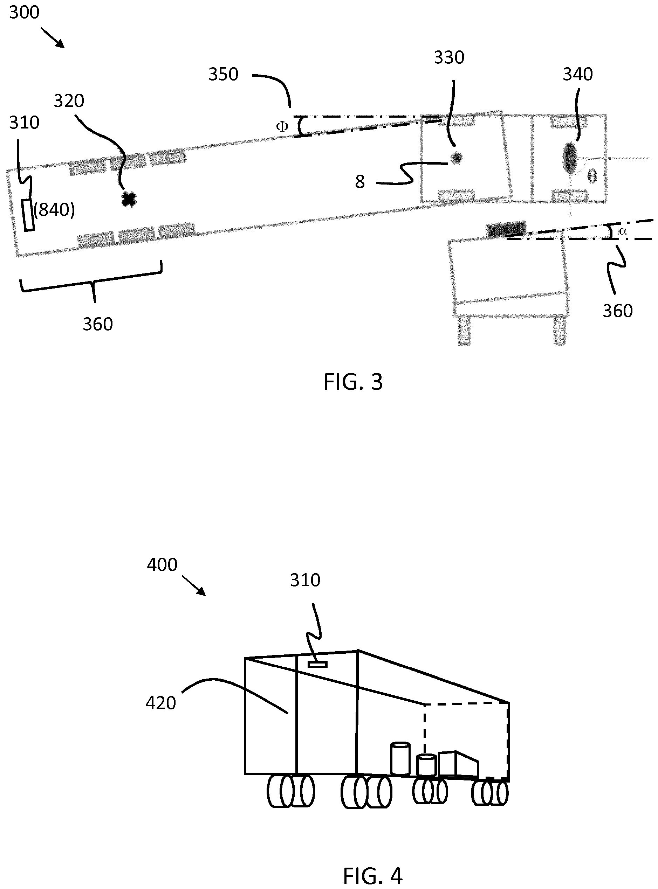

Figure 3 schematically illustrates an articulated vehicle 300. The vehicle comprises a sensor 310 arranged in connection to a rear end 360 of the articulated vehicle to detect at least when the rear end of the articulated vehicle drives over an obstacle 23, 24 and/or to detect a surface roughness level of the drivable area.

According to an example, the sensor 310 comprises a heading detection unit 840. This heading detection unit may, e.g., operate based on any of a compass or a global positioning system receiver, GPS. The heading detection unit 840 can be used to detect a heading of the rear end of the articulated vehicle.

This heading of the rear end of the articulated vehicle can be used to refine the determination of the swept area. However, in case the front end of the articulated vehicle 340 also comprises a heading detection unit, then an estimate of articulation angle 350 can be obtained based on a difference between the headings of the rear and front ends of the articulated vehicle. This estimated articulation angle can be used to determine the swept area as shown by the example calculations in US 9,862,413 B2. Advantageously, the estimated articulation angle by the difference in headings is independent from any other articulation angle sensors, such as a sensor 330 arranged in connection to a fifth wheel or kingpin 8 of the articulated vehicle. Consequently, the articulation angle value obtained in this way can be used to verify output from an external articulation angle sensor 330 of the articulated vehicle based on the estimated articulation angle value.

The sensor unit 310 may also comprise circuitry to determine an angle 360 of the rear end of the vehicle with respect to a horizontal level. This ground angle information can also be incorporated into the drivable area information. For instance, some areas may not be drivable due to a too steep slope or bank, which may cause risk of vehicle roll-over.

Figure 4 shows another example vehicle 400 comprising the sensor unit 310. Notably, this sensor unit is mounted separate from a door 420 of the vehicle. Therefore, the sensor unit is not affected if the door 420 is opened or removed from the vehicle for some reason.

The sensor units 310 discussed herein may according to some aspects comprise an inertial measurement unit (IMU), 850 configured to detect when the articulated vehicle drives over an obstacle and/or to detect when the articulated vehicle impacts an obstacle laterally, based on a measured acceleration.

The sensor units 310 discussed herein may according to some other aspects comprise a measurement device arranged in connection to the trailer suspension system configured to detect when the articulated vehicle drives over an obstacle.

Different obstacles can of course be present in the swept area. The obstacles are likely to differ in severity, and different operating scenarios may associate different levels of severity with different types of obstacles. For instance, a heavy duty truck for operating in a mine may not be overly sensitive to smaller bumps on the ground, while a semi-trailer having low ground clearance may be much more sensitive to uneven ground conditions with bumps and pot-holes.

The sensor units 310 discussed herein may also, according to some further aspects comprise a measurement device arranged in connection to the trailer suspension system configured to detect a level of road surface roughness. This information may be used to detect when the vehicle drives onto a road shoulder or drives off the road, even if no severe obstacles are encountered.

Consequently, the techniques disclosed herein may comprise classifying a detected obstacle according to a pre-configured list of obstacle types. The pre-configured list may comprise manually configured obstacle types and may comprise information related to severity and whether an autonomous driving algorithm is allowed to pass the obstacle, and if so with what speeds. As noted above, some obstacles may require a certain minimum speed in order to be traversed, in which case the autonomous driving algorithm may actually need to speed up in order to pass an obstacle.

The obstacle recording may comprise any of; determining a severity level of the obstacle, e.g., on a scale from 0 to 10, recording a location of the obstacle, or a location associated with a recorded obstacle.

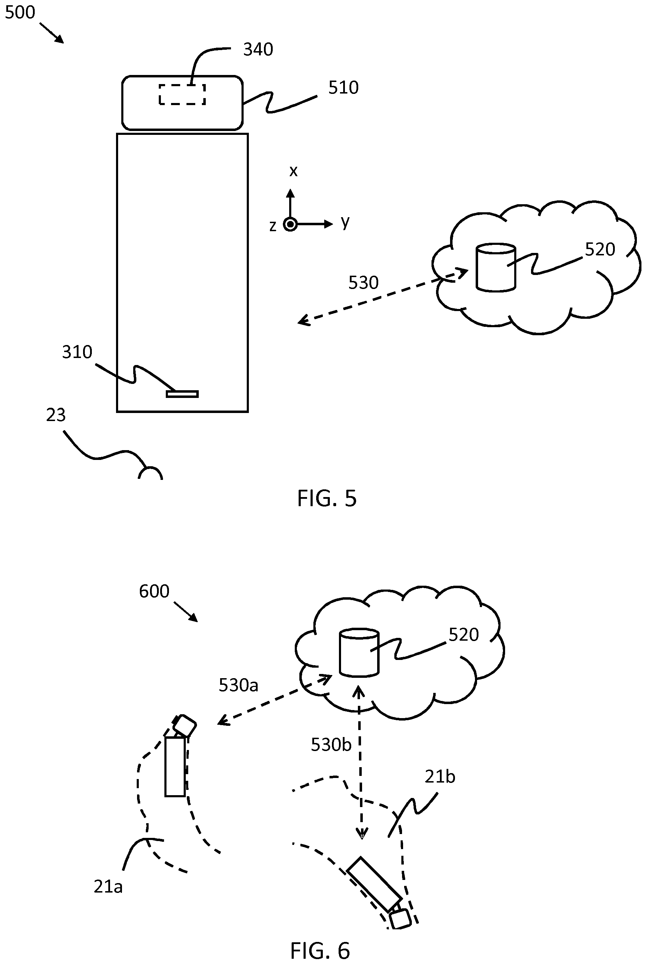

Figure 5 illustrates an articulated vehicle 500 comprising the sensor unit 310. This vehicle is configured to be connected to a remote server 520 for uploading and downloading data 530 related to drivable areas and to recorded obstacles. This way the vehicle can share information with other vehicles via the remote server.

Figure 6 illustrates a system 600 for updating map information related to drivable areas at a remote server 520. The system is arranged to receive information 530a, 530b from articulated vehicles related to drivable areas 21a, 21b. This way an articulated vehicle may obtain information related to drivable areas despite never having visited the area.

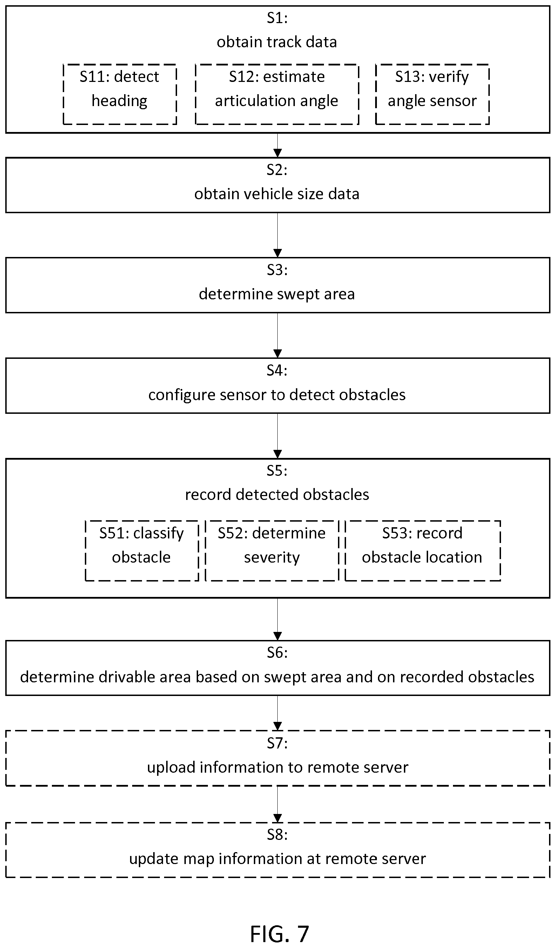

Figure 7 is a flow chart illustrating methods disclosed herein and which summarize the above discussions. The methods are performed by the sensor unit 310, or by the control unit 340, or by a combination of sensor unit and control unit.

There is illustrated a method for determining a drivable area by a vehicle 1, 2, 300, 400, 500. The method comprises obtaining S1 data related to a track 25 of the vehicle, wherein the data comprises a plurality of corresponding positions, headings and articulation angles 350 of the vehicle along the track, obtaining S2 size information of the vehicle, determining S3 a swept area 21 of the vehicle for the track based on the data and on the size information of the vehicle, configuring S4 a sensor 310 on the vehicle to detect when the vehicle drives over an obstacle 23, 24, recording S5 any obstacles detected by the sensor, and determining S6 the drivable area based on the swept area and on recorded obstacles.

According to aspects, the sensor 310 is arranged in connection to a rear end 360 of the vehicle to detect at least when the rear end of the vehicle drives over an obstacle 23, 24.

According to aspects, the sensor 310 comprises a heading detection unit 840, and the method comprises detecting S11 a heading of the rear end of the vehicle.

According to aspects, the heading detection unit 840 comprises any of a compass or a global positioning system receiver (GPS).

According to aspects, the vehicle is an articulated vehicle, and the method comprises obtaining S12 a heading of a front end of the articulated vehicle 340 and estimating an articulation angle 350 value based on a difference between the headings of the rear and front ends of the articulated vehicle.

According to aspects, the method comprises verifying S13 an output from an external articulation angle sensor 330 of the articulated vehicle based on the estimated articulation angle value.

According to aspects, the sensor 310 comprises an inertial measurement unit (IMU) 850 configured to detect when the vehicle drives over an obstacle and/or to detect when the vehicle impacts an obstacle laterally, based on a measured acceleration.

According to aspects, the sensor 310 comprises a measurement device arranged in connection to the trailer suspension system configured to detect when the vehicle drives over an obstacle.

According to aspects, the recording comprises classifying S51 a detected obstacle according to a pre-configured list of obstacle types.

According to aspects, the recording comprises determining S52 a severity level associated with each detected obstacle.

According to aspects, the recording comprises recording a location S53 associated with each detected obstacle.

According to aspects, the method comprises uploading information S7 related to the determined drivable area to a remote server 520.

According to aspects, the method comprises updating map information S8, by the remote server, based on the uploaded information.

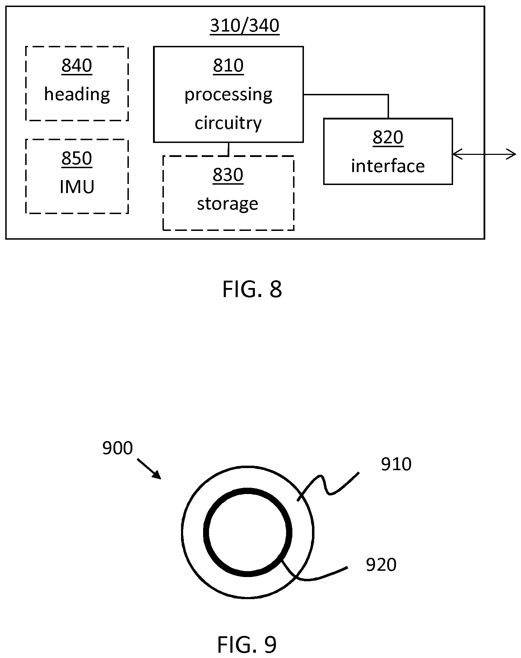

Figure 8 schematically illustrates, in terms of a number of functional units, the components of a control unit 340 or sensor unit 310 according to embodiments of the discussions herein. Processing circuitry 810 is provided using any combination of one or more of a suitable central processing unit CPU, multiprocessor, microcontroller, digital signal processor DSP, etc., capable of executing software instructions stored in a computer program product, e.g. in the form of a storage medium 830. The processing circuitry 810 may further be provided as at least one application specific integrated circuit ASIC, or field programmable gate array FPGA.

Particularly, the processing circuitry 810 is configured to cause the control unit 340 or sensor unit 310 to perform a set of operations, or steps, such as the methods discussed in connection to Figure 8. For example, the storage medium 830 may store the set of operations, and the processing circuitry 810 may be configured to retrieve the set of operations from the storage medium 830 to cause the control unit 340 or sensor unit 310 to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The control unit 340 or sensor unit 310 may further comprise an interface 820 for communications with at least one external device, such as the antenna array comprising the phase controllers and the mechanically rotatable base plate. As such the interface 820 may comprise one or more transmitters and receivers, comprising analogue and digital components and a suitable number of ports for wireline or wireless communication.

The processing circuitry 810 controls the general operation of the control unit 340 or sensor unit 310, e.g., by sending data and control signals to the interface 820 and the storage medium 830, by receiving data and reports from the interface 820, and by retrieving data and instructions from the storage medium 830. Other components, as well as the related functionality, of the control node are omitted in order not to obscure the concepts presented herein.

The control unit 340 optionally comprises a heading detection unit 840, such as a compass or GPS module. The control unit may also comprise an IMU 850

The sensor unit 310 may optionally comprise any of a heading unit 840 and an IMU 850.

Figure 8 thus schematically illustrates a sensor unit 310 for determining a drivable area by a vehicle 1, 2, 300, 400, 500. Notably, the sensor unit is arranged to detect when the vehicle drives over an obstacle 23, 24, and to record any obstacles detected by the sensor, and to transmit data related to any recorded obstacles to a control unit 250.

Figure 8 also schematically illustrates a control unit 250 for determining a drivable area by a vehicle 1, 2, 300, 400, 500. Notably, the control unit is arranged to obtain data related to a track 25 of the vehicle, wherein the data comprises a plurality of positions and corresponding headings and articulation angles of the vehicle along the track, and to determine a swept area 21 of the vehicle for the track based on the data and on size information of the vehicle. The control unit 250 is arranged to receive data related to one or more obstacles 23, 24 detected by a sensor unit 310, and to determine the drivable area based on the swept area and on the received data.

Figure 9 illustrates a computer readable medium 910 carrying a computer program comprising program code means 920 for performing the methods illustrated in Figure 7, when said program product is run on a computer. The computer readable medium and the code means may together form a computer program product 900.

## Claims

1. A method for determining a drivable area by a vehicle (1, 2, 300, 400, 500), the method comprising;
obtaining (S1) data related to a track (25) of the vehicle, wherein the data comprises a plurality of corresponding positions and headings of the vehicle along the track,
obtaining (S2) size information and cargo information of the vehicle,
determining (S3) a swept area (21) of the vehicle for the track based on the data and on the size information of the vehicle,
configuring (S4) a sensor (310) on the vehicle to detect when the vehicle makes contact with an obstacle (23, 24),
recording (S5) any obstacles detected by the sensor, and
determining (S6) the drivable area based on the swept area, on recorded obstacles, and on cargo information.

2. The method according to claim 1, wherein the sensor (310) is arranged in connection to a rear end (360) of the vehicle to detect at least when the rear end of the vehicle drives over an obstacle (23, 24) and/or to detect a surface roughness level of the drivable area.

3. The method according to any previous claim, wherein the sensor (310) comprises a heading detection unit (840), the method comprising detecting (S11) a heading of the rear end of the vehicle.

4. The method according to any previous claim, wherein the heading detection unit (840) comprises any of a compass or a global positioning system receiver, GPS.

5. The method according to any previous claim, wherein the vehicle is an articulated vehicle, the method comprising obtaining (S12) a heading of a front end of the articulated vehicle (340) and estimating an articulation angle (350) value based on a difference between the headings of the rear and front ends of the articulated vehicle.

6. The method according to claim 5, comprising verifying (S13) an output from an external articulation angle sensor (330) of the articulated vehicle based on the estimated articulation angle value.

7. The method according to any previous claim, wherein the sensor (310) comprises an inertial measurement unit, IMU, (850) configured to detect when the vehicle drives over an obstacle and/or to detect when the vehicle impacts an obstacle laterally, and/or to detect a surface roughness level of the drivable area, based on a measured acceleration.

8. The method according to any previous claim, wherein the sensor (310) comprises a measurement device arranged in connection to the trailer suspension system configured to detect when the vehicle drives over an obstacle and/or to detect a surface roughness level of the drivable area.

9. The method according to any previous claim, wherein the recording comprises classifying (S51) a detected obstacle according to a pre-configured list of obstacle types.

10. The method according to any previous claim, wherein the recording comprises determining (S52) a severity level associated with each detected obstacle.

11. The method according to any previous claim, wherein the recording comprises recording a location (S53) associated with each detected obstacle.

12. The method according to any previous claim, comprising uploading information (S7) related to the determined drivable area to a remote server (520).

13. The method according to claim 12, comprising updating map information (S8), by the remote server, based on the uploaded information.

14. A computer program comprising program code means (720) for performing the steps of any of claims 1-13, when said program is run on a computer.

15. A computer readable medium (710) carrying a computer program comprising program code means (720) for performing the steps of any of claims 1-13, when said program product is run on a computer.

16. A control unit (310, 340) for determining a drivable area by a vehicle (1, 2, 300, 400, 500), the control unit being configured to perform the steps of the method according to any of claims 1-13.

17. A system for determining a drivable area by a vehicle, comprising a sensor unit (310) and a control unit (340) according to claim 16, wherein the sensor unit and control unit are co-located or arranged as separate entities, wherein the sensor unit is arranged to detect when the vehicle drives over an obstacle (23, 24), and to record any obstacles detected by the sensor, and to transmit data related to any recorded obstacles to the control unit (340).

18. A vehicle (1, 2, 300, 400, 500) comprising the system according to claim 17.

## Patentansprüche

1. Verfahren zum Bestimmen eines befahrbaren Bereichs durch ein Fahrzeug (1, 2, 300, 400, 500), das Verfahren umfassend;
Erhalten (S1) von Daten, die sich auf eine Bahn (25) des Fahrzeugs beziehen, wobei die Daten eine Vielzahl von entsprechenden Positionen und Richtungen des Fahrzeugs entlang der Spur umfassen,
Erhalten (S2) von Größeninformationen und Frachtinformationen des Fahrzeugs,
Bestimmen (S3) eines Spurbereichs (21) des Fahrzeugs für die Bahn auf der Grundlage der Daten und der Größeninformationen des Fahrzeugs,
Konfigurieren (S4) eines Sensors (310) an dem Fahrzeug, um zu erfassen, wenn das Fahrzeug mit einem Hindernis (23, 24) in Kontakt kommt,
Aufzeichnen (S5) jeglicher vom Sensor erfassten Hindernisse und
Bestimmen (S6) des befahrbaren Bereichs auf der Grundlage des Spurbereichs, der aufgezeichneten Hindernisse und der Frachtinformationen.

2. Verfahren nach Anspruch 1, wobei der Sensor (310) in Verbindung mit einem hinteren Ende (360) des Fahrzeugs angeordnet ist, um mindestens zu erfassen, wenn das hintere Ende des Fahrzeugs über ein Hindernis (23, 24) fährt und/oder um ein Oberflächenrauhigkeitsgrad des befahrbaren Bereichs zu erfassen.

3. Verfahren nach einem der vorhergehenden Ansprüche, wobei der Sensor (310) eine Kurserfassungseinheit (840) umfasst, das Verfahren umfassend Erfassen (S11) eines Kurses des hinteren Endes des Fahrzeugs.

4. Verfahren nach einem der vorhergehenden Ansprüche, wobei die Kurserfassungseinheit (840) einen Kompass oder einen globalen Positionssystemempfänger, GPS, umfasst.

5. Verfahren nach einem der vorhergehenden Ansprüche, wobei das Fahrzeug ein Gelenkfahrzeug ist, das Verfahren umfassend Erhalten (S12) eines Kurses eines vorderen Endes des Gelenkfahrzeugs (340) und Schätzen eines Knickwinkelwerts (350) basierend auf einer Differenz zwischen den Kursen der hinteren und vorderen Enden des Gelenkfahrzeugs.

6. Verfahren nach Anspruch 5, umfassend Verifizieren (S13) eines Ausgangs von einem externen Knickwinkelsensor (330) des Gelenkfahrzeugs basierend auf dem geschätzten Knickwinkelwert.

7. Verfahren nach einem der vorhergehenden Ansprüche, wobei der Sensor (310) eine Trägheitsmesseinheit, IMU, (850) umfasst, die konfiguriert ist, zu erfassen, wenn das Fahrzeug über ein Hindernis fährt und/oder zu erfassen, wenn das Fahrzeug mit einem Hindernis seitlich kollidiert, und/oder basierend auf einer gemessenen Beschleunigung einen Oberflächenrauhigkeitsgrad des befahrbaren Bereichs zu erfassen.

8. Verfahren nach einem der vorhergehenden Ansprüche, wobei der Sensor (310) eine Messvorrichtung umfasst, die in Verbindung mit dem Anhängeraufhängungssystem angeordnet ist und konfiguriert ist, zu erfassen, wenn das Fahrzeug über ein Hindernis fährt, und/oder einen Oberflächenrauhigkeitsgrad des befahrbaren Bereichs zu erfassen.

9. Verfahren nach einem der vorhergehenden Ansprüche, wobei das Aufzeichnen ein Klassifizieren (S51) eines erfassten Hindernisses gemäß einer vorkonfigurierten Liste von Hindernistypen umfasst.

10. Verfahren nach einem der vorhergehenden Ansprüche, wobei das Aufzeichnen ein Bestimmen (S52) eines Schweregrades umfasst, der mit jedem erfassten Hindernis assoziiert ist.

11. Verfahren nach einem der vorhergehenden Ansprüche, wobei das Aufzeichnen ein Aufzeichnen eines Standortes (S53) umfasst, der mit jedem erfassten Hindernis assoziiert ist.

12. Das Verfahren nach einem der vorhergehenden Ansprüche, umfassen Hochladen von Informationen (S7), die sich auf den bestimmten befahrbaren Bereich beziehen, auf einen Remote-Server (520).

13. Verfahren nach Anspruch 12, umfassend Aktualisieren von Karteninformationen (S8) durch den Remote-Server basierend auf den hochgeladenen Informationen.

14. Computerprogramm umfassend Programmcodemittel (720) zum Durchführen der Schritte nach einem der Ansprüche 1-13, wenn das Programm auf einem Computer ausgeführt wird.

15. Computerlesbares Medium (710), das ein Computerprogramm trägt, umfassend Programmcodemittel (720) zum Durchführen der Schritte nach einem der Ansprüche 1-13, wenn besagtes Programmprodukt auf einem Computer ausgeführt wird.

16. Steuereinheit (310, 340) zum Bestimmen eines befahrbaren Bereichs durch ein Fahrzeug (1, 2, 300, 400, 500), wobei die Steuereinheit konfiguriert ist, die Schritte des Verfahrens nach einem der Ansprüche 1-13 durchzuführen.

17. System zum Bestimmen eines befahrbaren Bereichs durch ein Fahrzeug, umfassend eine Sensoreinheit (310) und eine Steuereinheit (340) nach Anspruch 16, wobei die Sensoreinheit und die Steuereinheit gemeinsam untergebracht oder als getrennte Einheiten angeordnet sind, wobei die Sensoreinheit angeordnet ist, zu erfassen, wenn das Fahrzeug über ein Hindernis (23, 24) fährt, und jegliche von dem Sensor erfasste Hindernisse aufzuzeichnen, und Daten, die jegliche aufgezeichnete Hindernisse betreffen, der Steuereinheit (340) zu übermitteln.

18. Fahrzeug (1, 2, 300, 400, 500) umfassend das System nach Anspruch 17.

## Revendications

1. Procédé de détermination d'une zone carrossable par un véhicule (1, 2, 300, 400, 500), le procédé comprenant :
l'obtention (S1) de données relatives à une voie (25) du véhicule, dans lequel les données comprennent une pluralité de positions et de caps correspondants du véhicule le long de la voie,
l'obtention (S2) d'informations de taille et d'informations de cargaison du véhicule,
la détermination (S3) d'une zone balayée (21) du véhicule pour la voie sur la base des données et des informations de taille du véhicule,
la configuration (S4) d'un capteur (310) sur le véhicule pour détecter le moment où le véhicule entre en contact avec un obstacle (23, 24),
l'enregistrement (S5) de tout obstacle détecté par le capteur, et
la détermination (S6) de la zone carrossable sur la base de la zone balayée, des obstacles enregistrés et des informations de cargaison.

2. Procédé selon la revendication 1, dans lequel le capteur (310) est agencé en liaison avec une extrémité arrière (360) du véhicule pour détecter au moins le moment où l'extrémité arrière du véhicule se déplace sur un obstacle (23, 24) et/ou pour détecter un niveau de rugosité de surface de la zone carrossable.

3. Procédé selon l'une des revendications précédentes, dans lequel le capteur (310) comprend une unité de détection de cap (840), le procédé comprenant la détection (S11) d'un cap de l'extrémité arrière du véhicule.

4. Procédé selon l'une des revendications précédentes, dans lequel l'unité de détection de cap (840) comprend l'un quelconque parmi une boussole ou un récepteur de système mondial de localisation, GPS.

5. Procédé selon l'une des revendications précédentes, dans lequel le véhicule est un véhicule articulé, le procédé comprenant l'obtention (S12) d'un cap d'une extrémité avant du véhicule articulé (340) et l'estimation d'une valeur de l'angle d'articulation (350) sur la base d'une différence entre les caps des extrémités arrière et avant du véhicule articulé.

6. Procédé selon la revendication 5, comprenant la vérification (S13) d'une sortie provenant d'un capteur d'angle d'articulation externe (330) du véhicule articulé sur la base de la valeur d'angle d'articulation estimée.

7. Procédé selon l'une des revendications précédentes, dans lequel le capteur (310) comprend une unité de mesure inertielle, IMU, (850) configurée pour détecter le moment où le véhicule se déplace sur un obstacle et/ou pour détecter le moment où le véhicule heurte un obstacle latéralement, et/ou pour détecter un niveau de rugosité de surface de la zone carrossable, sur la base d'une accélération mesurée.

8. Procédé selon l'une des revendications précédentes, dans lequel le capteur (310) comprend un dispositif de mesure agencé en liaison avec le système de suspension de remorque configuré pour détecter le moment où le véhicule se déplace sur un obstacle et/ou pour détecter un niveau de rugosité de surface de la zone carrossable.

9. Procédé selon l'une des revendications précédentes, dans lequel l'enregistrement comprend la classification (S51) d'un obstacle détecté selon une liste préconfigurée de types d'obstacles.

10. Procédé selon l'une des revendications précédentes, dans lequel l'enregistrement comprend la détermination (S52) d'un niveau de gravité associé à chaque obstacle détecté.

11. Procédé selon l'une des revendications précédentes, dans lequel l'enregistrement comprend l'enregistrement d'un emplacement (S53) associé à chaque obstacle détecté.

12. Procédé selon l'une des revendications précédentes, comprenant le téléchargement d'informations (S7) relatives à la zone carrossable déterminée vers un serveur distant (520).

13. Procédé selon la revendication 12, comprenant la mise à jour d'informations cartographiques (S8), par le serveur distant, sur la base des informations téléchargées.

14. Programme informatique comprenant des moyens de code de programme (720) pour réaliser les étapes de l'une des revendications 1 à 13, lorsque ledit programme est exécuté sur un ordinateur.

15. Support lisible par ordinateur (710) portant un programme informatique comprenant des moyens de code de programme (720) pour réaliser les étapes de l'une des revendications 1 à 13, lorsque ledit produit de programme est exécuté sur un ordinateur.

16. Unité de commande (310, 340) pour déterminer une zone carrossable par un véhicule (1, 2, 300, 400, 500), l'unité de commande étant configurée pour réaliser les étapes du procédé selon l'une des revendications 1 à 13.

17. Système pour déterminer une zone carrossable par un véhicule, comprenant une unité de capteur (310) et une unité de commande (340) selon la revendication 16, dans lequel l'unité de capteur et l'unité de commande sont colocalisées ou agencées en tant qu'entités séparées, dans lequel l'unité de capteur est agencée pour détecter le moment où le véhicule se déplace sur un obstacle (23, 24), et pour enregistrer tout obstacle détecté par le capteur, et pour transmettre des données relatives à tout obstacle enregistré à l'unité de commande (340).

18. Véhicule (1, 2, 300, 400, 500) comprenant le système selon la revendication 17.
